# EUROPÄISCHE PATENTSCHRIFT

(11) **EP 3 561 805 B1**
(45) Veröffentlichungstag und Bekanntmachung des Hinweises auf die Patenterteilung: **25.08.2021**
(21) Anmeldenummer: 19166948.0
(22) Anmeldetag: 03.04.2019
(51) Int. Cl.: G10K 15/02, B60Q 5/00, B60Q 9/00

(54) **FAHRZEUG MIT WENIGSTENS EINER GERÄUSCHQUELLE**
VEHICLE WITH AT LEAST ONE NOISE SOURCE
VÉHICULE À AU MOINS UNE SOURCE DE BRUIT

(30) Priorität: 23.04.2018 DE 102018109694
(43) Veröffentlichungstag der Anmeldung: 30.10.2019
(73) Patentinhaber: MAN Truck & Bus SE, 80995 München (DE)
(72) Erfinder: Tröbst, Steffen, 07646 Waldeck (DE)
(74) Vertreter: v. Bezold & Partner Patentanwälte - PartG mbB

(56) Entgegenhaltungen:
- CN-A- 106 933 146
- JP-A- 2013 065 260
- Stamatina Kalafata: "Sound Levels, Noise Source Identification and Perceptual Analysis in an Intensive Care Unit Master's Thesis in the Master's programme in Sound and Vibration", , 31. Dezember 2014 (2014-12-31), XP055616311, Gefunden im Internet: URL:http://citeseerx.ist.psu.edu/viewdoc/d ownload?doi=10.1.1.858.3540&rep=rep1&type= pdf [gefunden am 2019-08-28]
- MING YANG ET AL: "Psychoacoustical evaluation of natural and urban sounds in soundscapes", THE JOURNAL OF THE ACOUSTICAL SOCIETY OF AMERICA, Bd. 134, Nr. 1, 1. Juli 2013 (2013-07-01), Seiten 840-851, XP055616322, New York, NY, US ISSN: 0001-4966, DOI: 10.1121/1.4807800

## Beschreibung

Die Erfindung betrifft ein Fahrzeug mit wenigstens einer Geräuschquelle nach dem Oberbegriff des Anspruchs 1 sowie ein Verfahren zum Betreiben des Fahrzeugs nach Anspruch 8.

Geräuschquellen in Fahrzeugen sind allgemein bekannt. Beispielsweise wird mit einer Hupe ein Warngeräusch erzeugt, welches zur Warnung anderer Verkehrsteilnehmer vom Fahrzeug abstrahlt. Andererseits sind Geräuschquellen im Fahrzeug bekannt, welche einen Fahrer bei gefährlichen Situationen mit einem Warngeräusch im Innenraum warnen, beispielsweise über einen Radarsensor bei einer gefährlichen Annäherung an ein anderes Fahrzeug oder über einen Spurwechselassistent zur Warnung vor einem gefährlichen Spurwechsel. Die Zahl von Fahrerassistenzsystemen mit Warnfunktion steigt ständig mit der Weiterentwicklung intelligenter Sensoren insbesondere im Hinblick auf ein angestrebtes autonomes Fahren eines Fahrzeugs.

Weiter sind Geräuschquellen im oder am Fahrzeug bekannt, welche Hinweisgeräusche erzeugen, die beispielsweise auf einen fast leeren Treibstofftank oder einen fast leeren Tank einer Scheibenwaschanlage oder auf einen nicht angelegten Sicherheitsgurt, etc. hinweisen. In modernen Fahrzeugen sind bekanntlich eine Vielzahl solcher Fahrerassistenzsysteme mit Hinweischarakter enthalten. Häufig werden auch bestimmte Bediengeräusche für die verbauten Bedien- und Multimediasysteme eingesetzt.

Bei der zunehmenden Elektro-Mobilität kann es im Straßenverkehr zudem zu Situationen kommen, bei denen Gefahren durch die elektrisch betriebenen Fahrzeuge zu spät oder gar nicht durch andere Verkehrsteilnehmer wahrgenommen werden, da die akustischen Emissionen zu gering sind oder nicht mit einem Fahrzeug in Verbindung gebracht werden. Die Geräuschcharakteristik der Elektro-Fahrzeuge ist für die derzeitigen Generationen zudem ungewohnt und wird daher eher als befremdlich gesehen. Dabei werden im äußeren Nahfeld häufig synthetische Geräuschmuster hinzugefügt, die nicht unbedingt passend sind.

Derzeit werden vorstehende Geräusche von Fahrzeugakustikern geplant und entwickelt und insbesondere durch Schalldruckpegel, spektrale Zusammensetzung und Modulation definiert, wobei zudem diese Parameter-Funktionen der Zeit, des Abstands, des Orts oder deren Kombination sein können. Bei diesen Geräuschen bzw. akustischen Signalen handelt es sich üblicherweise um synthetische Klänge und Töne, die nicht direkt mit psychoakustischen Erfahrungen korrelieren.

Das Dokument CN 106933146 A beschreibt eine Fußgänger-Warnton-Entwurfsmethode für Elektroautos und ein Elektroauto mit einem Lautsprecher.

Die Veröffentlichung "Sound Levels, Noise Source Identification and Perceptual Analysis in an Intensive Care Unit Master's Thesis in the Master's programme in Sound and Vibration", 31. Dezember 2014, beschreibt einen Ansatz, der zum Ziel hat, in einer vergleichbaren Patientensituation die Verteilung der resultierenden Schalldruckpegel zu analysieren und die Geräuschquellen und die Wahrnehmungseigenschaften der Geräusche in den Räumen zu identifizieren.

Das Dokument JP 2013065260 A beschreibt eine Alarmvorrichtung für ein Fahrzeug, die an einem Fahrzeug angebracht ist und einen Fahrer des Fahrzeugs alarmiert und die einen Warnpunkt in der Nähe des Fahrzeugs erkennt, der Aufmerksamkeit erfordert.

Aufgabe der Erfindung ist es, ein Fahrzeug mit wenigstens einer Geräuschquelle und ein Verfahren zum Betreiben des Fahrzeugs bereitzustellen, mittels denen Geräusche mit einer besonders effektiven psychoakustischen Wirkung ausgegeben werden.

Diese Aufgabe wird durch ein Fahrzeug mit wenigstens einer Geräuschquelle gemäß Anspruch 1 sowie durch ein Verfahren zum Betreiben eines Fahrzeugs gemäß Anspruch 8 gelöst. Bevorzugte Weiterbildungen sind in den Unteransprüchen offenbart.

Die beanspruchten Raumbereiche eines 5-dimensionalen Raums wurden mit einer Vielzahl von Experimenten ermittelt, wobei insbesondere natürliche Geräusche, welche ein beruhigendes angenehmes Gefühl erzeugen, oder ein eher neutrales Empfinden auflösen oder ein bedrohliches Gefühl vermitteln, psychoakustisch analysiert worden sind. In den beanspruchten Raumbereichen werden Geräusche mit einer besonders effektiven psychoakustischen Wirkung ausgegeben. Dabei wirken die akustischen Signale effektiv auf das menschliche Unterbewusstsein, wodurch beispielsweise bei einem Warngeräusch die Reaktion eines Fahrers auf eine bevorstehende Gefahr intuitiv mit weniger Verzögerung, in angemessenerer Art und folgerichtiger ausgeführt wird.

Die erzeugten Geräusche können dabei Mustern entsprechen, die dem Menschen in der Evolution mitgegeben worden sind und vom Menschen intuitiv als bedrohlich oder angenehm empfunden werden. In einer bevorzugten Ausgestaltung sind die erzeugten Geräusche durch Naturgeräusche gebildet (beispielsweise das Zischen einer Schlange, das Krächzen eines Raben, das Fauchen eines Raubtiers, das Weinen eines Babys, das Schnurren einer Katze, das Plätschern eines Bachs oder das Rauschen von Wind im Wald). Alternativ können die erzeugten Geräusche auch durch epochenbezogene Geräuschmuster gebildet sein (Sirenentöne, "sphärische Klänge").

Um einen Nutzer beispielsweise vor gefährlichen Situationen zu warnen, können Klangstrukturen verwendet werden, wie sie in archaischen Lauten vorkommen oder die misophone Bestandteile aufweisen. Dabei kann durch den Gradient der Lautheit den empfundenen Abstand zur Gefahr vermittelt werden. Zudem kann das Variieren der akustischen Missempfindung zu diesem Zwecke genutzt werden. Durch die Nutzung misophoner und archaischer Geräuschmuster werden die akustischen Hinweise dabei nicht als befremdlich empfunden.

Ein Warngeräusch kann beispielsweise durch ein eher negatives Geräusch gebildet sein, wie beispielsweise ein bedrohliches Grollen (Gewitter), das Geräusch einer Kreissäge oder das Geräusch einer Stechmücke.

Durch die Verwendung der beschriebenen Hinweis-Geräuschmuster kann beispielsweise der Nutzer bzw. Fahrer des Fahrzeugs direkt darauf hingewiesen werden, dass das Fahrzeug in einem nicht optimalen Betriebsbereich betrieben wird, eine Störung vorliegt oder Umweltbedingungen ihn zu einer anderen Fahrweise veranlassen sollen. Da die Geräuschmuster auf das Unterbewusstsein einwirken, wird dies auch nicht störend oder belehrend empfunden, sondern die Handlungen laufen als selbstverständliche Mensch-Maschine-Interaktion ab.

Ein Wohlbefindens-Geräusch kann beispielsweise durch ein eher positives Geräusch gebildet sein, wie beispielsweise das Schnurrgeräusch einer Katze oder das Plätschern eines Baches.

Zudem können beispielsweise funktionelle Störgeräusche des Antriebsstranges durch Wohlbefindens-Geräusche maskiert werden, wodurch eine höhere Wertigkeit und ein angenehmes Raumklima vermittelt wird. Das wirkt sich auf das Wohlbefinden des Nutzers direkt aus, die Verringerung von Stress und Ermüdung sind die positiven Auswirkungen.

Durch spezielle Abläufe der Auralisation bzw. Abgabe der beschriebenen Geräusche vor, während und nach der Nutzung des Fahrzeuges kann zudem eine Interaktion zwischen Nutzer und Fahrzeug derart gestaltet werden, dass sich eine bessere Identifikation mit dem Fahrzeug ergibt, wodurch die Bereitschaft zur Pflege und Wartung und zum gegebenenfalls schonenderen Umgang gesteigert wird. Dadurch werden die Gesamtkosten während des Zeitraumes der Nutzung verringert und ein Beitrag zur aktiven Kundenbindung geleistet.

Die beschriebenen bzw. beanspruchten Geräusche können auch auf das äußere Umfeld des Fahrzeuges angewendet werden bzw. in die Fahrzeugumgebung ausgegeben werden. Dadurch ist es möglich, das Fahrzeug besser in die urbane Geräuschlandschaft einzubinden, Gefahren zu reduzieren und die Akzeptanz zu steigern.

Durch eine Kombination der Ausgabe der beschriebenen Geräusche nach innen bzw. in den Fahrgastraum und nach außen bzw. in die Fahrzeugumgebung kann zudem das authentischen Gesamtbild des Fahrzeugs erhöht werden, wodurch Disharmonien vermieden werden.

Die innere und/oder die äußere Geräuschabgabe kann durch mindestens eine direkte und/oder durch mindestens eine indirekte Schallquelle (Anregung vorhandener Fahrzeugteile, die die Geräuschkomponenten dann abstrahlen) erfolgen.

Die angegebenen Geräusche können dabei beispielsweise mit einem Entertainmentsystem des Fahrzeugs als Geräuschquelle oder mit einem anderen, von einem Steuergerät des Fahrzeugs angesteuerten, insbesondere separaten, System des Fahrzeugs als Geräuschquelle erzeugt werden, insbesondere in Verbindung mit einem oder mehreren Lautsprechern.

In an sich bekannter Weise kann dabei eine Geräuschquelle durch eine Sensorik bei bestimmten vorgegebenen Situationen selbsttätig und/oder subjektiv durch einen Fahrer zur Ausgabe wenigstens eines Geräuschs aktivierbar sein. Bei einer selbsttätigen bzw. automatisierten Aktivierung kann das Fahrzeug mindestens eine Verarbeitungseinheit aufweisen, die die Betriebs- und Fahrzustände entweder direkt erfasst oder von den Fahrzeug- Steuergeräten übermittelt bekommt. Dabei können Signale der Assistenzsysteme sowie GPS-Daten und Umweltbedingungen erfasst und ausgewertet werden. Diese Informationen können in der Verarbeitungseinheit analysiert werden, wodurch daraufhin die Zumischung der Geräuschanteile bemessen werden kann.

Die Geräusche können dabei in Abhängigkeit von der Zeit, in Abhängigkeit von dem aktuellen Standort bzw. der aktuellen Position des Fahrzeugs und/oder in Abhängigkeit von dem aktuellen Fahrzeugzustand selbsttätig erzeugt bzw. ausgegeben werden, so dass der Fahrer des Fahrzeugs je nach Situation eine positive, neutrale oder negative Rückmeldung erhält, die direkt das Unterbewusstsein anspricht und eine intuitive Reaktion auslöst.

Eine Sensorik für eine selbsttätige Aktivierung von Geräuschquellen kann beispielhaft Näherungssensoren, insbesondere als Ultraschallsensoren enthalten, mit denen Kollisionsmöglichkeiten erfasst werden, welche zur Aktivierung von Warngeräuschen führen. Weiter kann die Sensorik Zeitgeber und/oder Fahrstrecken-Zähler umfassen, die nach bestimmten aufgelaufenen Zählerständen zur Auslösung von Hinweisgeräuschen für erforderliche Wartungen führen. Weiter können Wärme-Sensoren oder Sitzbelegungssensoren im Fahrzeug installiert sein, die ebenfalls Hinweisgeräusche auslösen können. Die Anzahl bekannter Fahrerassistenzsysteme mit ähnlichen Sensoren, welche einen Fahrer bei seinen Fahraufgaben oder bei der Fahrzeugwartung unterstützen oder sein Wohlbefinden steigern sollen ist bereits groß und wird in Zukunft weiter steigen.

In an sich bekannter Weise können die Geräusche in unterschiedlichen Richtungen und/oder mit unterschiedlichen Lautstärken abstrahlbar sein, wobei solche Unterschiede mit erfassten unterschiedlichen Situationen korreliert sind. Bei einer gerichteten Beschallung ist es bevorzugt, wenn insgesamt mindestens zwei Lautsprecher als Geräuschquellen vorgesehen sind.

Insbesondere können Warngeräusche aus einer Richtung abgestrahlt werden, aus der eine unmittelbare oder voraussichtliche Gefahr detektiert wurde. Wenn beispielsweise eine unzulässig schnelle heckseitige Annäherung eines anderen Fahrzeugs mit der Gefahr einer Heckkollision detektiert wird, kann für einen Fahrer ein Warngeräusch mit einem Lautsprecher erzeugt werden, der den Fahrer von hinten her beschallt. Weiter kann dann das Warngeräusch mit einer Lautstärke abstrahlbar sein, die umso größer ist, je größer eine unmittelbare oder voraussichtliche Gefahr, zum Beispiel ein Heckaufprall, detektiert wurde.

Die vorstehenden, deutlich unterscheidbaren Geräuschstrukturen, als Wohlbefindens-Geräusche, Hinweisgeräusche oder Warngeräusche können mit Hilfe zugeordneter unterschiedlicher Geräuschquellen generiert werden. Alternativ soll auch deren Erzeugung mit einer einzigen Geräuschquelle umfasst und beansprucht sein, mit der umschaltbar Wohlbefindens-Geräusche, Hinweisgeräusche oder Warngeräusche generierbar sind.

Gemäß Anspruch 8 wird ein Verfahren zum Betreiben eines Fahrzeugs beansprucht.

Dabei ist für die psychoakustische Schärfe eines Hörereignisses das Acum (lateinisch für "scharf") mit dem Einheitenzeichen acum definiert. Als Referenzschall für die Schärfe 1 acum dient ein schmalbandiges Rauschen von 920 Hz bis 1080 Hz bei einem Schalldruckpegel von 60 dB. Die Schärfe anderer Geräusche wird durch Verhältnisskalierung bestimmt: ein Geräusch, dessen Schärfe als halb so scharf wie das Referenzgeräusch empfunden wird, hat die Schärfe von beispielsweise 0,5 acum.

Die Rauigkeit ist eine psychoakustische Empfindungsgröße, die besonders bei frequenz- und amplitudenmodulierten Geräuschen wahrgenommen wird. Die Rauigkeit eines Geräusches wird durch Hörversuche ermittelt und in der Maßeinheit asper angegeben. 1 asper entspricht der Rauigkeit eines zu 100% mit 70 Hz modulierten 1-kHz-Sinustons bei einem Schalldruckpegel von 60 dB. Die Rauigkeit lässt sich durch ein Rechenverfahren nachbilden.

Die Schwankungsstärke ist eine Messgröße für die subjektiv empfundene Schwankung der Lautstärke. Die Maßeinheit der Schwankungsstärke ist 1 vacil. 1 vacil ist definiert als Schwankungsstärke eines 1-kHz-Tons von 60 dB Schalldruck, der mit einer Frequenz von 4 Hz und einem Modulationsgrad von 1,0 = 100% amplitudenmoduliert wird. Die Schwankungsstärke ist verhältnisskaliert, das heißt ein Geräusch, das doppelt so schwankend empfunden wird wie das Definitionsgeräusch, besitzt eine Schwankungsstärke von 2 vacil. Ein Modell zur Berechnung der Schwankungsstärke ist bekannt.

Die Lautheit als subjektive Lautstärkewahrnehmung wird in der psychoakustischen Maßeinheit sone gemessen und beruht auf der Definition des Lautstärkepegels im Phon. Einem Lautstärkepegel von 40 Phon wird die Lautheit 1 sone zugeordnet.

Die Bark-Skala ist eine psychoakustische Skale für die wahrgenommene Tonhöhe (Tonheit). Eine Verdopplung des Bark-Wertes bedeutet, dass der entsprechende Ton als doppelt so hoch empfunden wird. Die bekannte Bark-Frequenzskale ist in 24 Frequenzgruppen eingeteilt, wobei beispielsweise 10 bark 1270 Hz und 16 bark 3150 Hz entsprechen.

Die ebenfalls zu berücksichtigenden Modulationsfrequenzen, die jeweils nicht kleiner als 20 Hz bzw. 10 Hz sein sollen, haben insbesondere auch einen Einfluss auf die Art der Rauigkeit.

Die vorstehend erläuterten Definitionen zu den relevanten fünf psychoakustischen Parametern sind bei der Auslegung der angegebenen unterschiedlichen Geräusche zu berücksichtigen.

## Patentansprüche

1. Fahrzeug, insbesondere Nutzfahrzeug, mit wenigstens einer Geräuschquelle, wobei die
wenigstens eine Geräuschquelle im oder am Fahrzeug installiert ist und angepasst ist ein Geräusch als Wohlbefindens-Geräusch zu erzeugen, insbesondere an einen Fahrer des Fahrzeugs auszugeben, das durch fünf psychoakustische Parameter, nämlich seine
- Schärfe
- Rauigkeit
- Schwankungsstärke
- Modulationsfrequenzen und
- Dominante spezifische Lautheiten in Bark-Frequenzgruppen
definiert ist, die innerhalb eines 5-dimensionalen Raumbereichs liegen, der begrenzt ist durch
- Schärfe kleiner 1 acum
- Rauigkeit im Bereich 0,12 bis 0,25 asper
- Schwankungsstärke kleiner 0,5 vacil
- Keine Modulationsfrequenzen kleiner 20 Hz
- Dominante spezifische Lautheiten in Frequenzgruppen kleiner Bark 12
und
wobei wenigstens eine Geräuschquelle im oder am Fahrzeug installiert ist und angepasst ist ein Geräusch als Hinweisgeräusch zu erzeugen, insbesondere an einen Fahrer des Fahrzeugs auszugeben, das durch fünf psychoakustische Parameter, nämlich seine
- Schärfe
- Rauigkeit
- Schwankungsstärke
- Modulationsfrequenzen und
- Dominante spezifische Lautheiten in Bark-Frequenzgruppen
definiert ist, die innerhalb eines 5-dimensionalen Raumbereichs liegen, der begrenzt ist durch
- Schärfe 1 bis 2,5 acum
- Rauigkeit im Bereich 0,25 bis 0,4 asper
- Schwankungsstärke kleiner 0,5 vacil
- Keine Modulationsfrequenzen kleiner 10 Hz
- Dominante spezifische Lautheiten in Frequenzgruppen 10 bis 16 bark
und
wobei wenigstens eine Geräuschquelle im oder am Fahrzeug installiert ist und angepasst ist ein Geräusch als Warngeräusch zu erzeugen, insbesondere an einen Fahrer des Fahrzeugs auszugeben, das durch fünf psychoakustische Parameter, nämlich seine
- Schärfe
- Rauigkeit
- Schwankungsstärke
- Modulationsfrequenzen und
- Dominante spezifische Lautheiten in Bark-Frequenzgruppen definiert ist, die innerhalb eines 5-dimensionalen Raumbereichs liegen, der begrenzt ist durch
- Schärfe 2,5 bis 4 acum
- Rauigkeit im Bereich 0,5 bis 0,8 asper
- Schwankungsstärke größer 0,5 vacil
- Keine Modulationsfrequenzen kleiner 10 Hz
- Dominante spezifische Lautheiten in Frequenzgruppen 18 bis 22 bark.

2. Fahrzeug nach Anspruch 1, wobei die wenigstens eine Geräuschquelle durch eine Sensorik bei bestimmten vorgegebenen Situationen selbsttätig und/oder subjektiv durch einen Fahrer aktivierbar ist.

3. Fahrzeug nach Anspruch 2, wobei die Sensorik Näherungssensoren, insbesondere als Ultraschallsensoren oder Lasersensoren, sowie Zeitgeber und/oder Fahrstrecken-Zähler und/oder Wärmesensoren und/oder Sitzbelegungssensoren und/oder ähnliche Sensoren aufweist.

4. Fahrzeug nach einem der Ansprüche 1 bis 3, wobei die Geräusche aus der wenigstens einen Geräuschquelle in unterschiedliche Richtungen und/oder mit unterschiedlichen Lautstärken abstrahlbar sind.

5. Fahrzeug nach Anspruch 4, wobei die Warngeräusche aus einer Richtung abstrahlbar sind, aus der eine unmittelbare oder voraussichtliche Gefahr detektiert wurde.

6. Fahrzeug nach Anspruch 4 oder Anspruch 5, wobei die Warngeräusche mit einer Lautstärke abstrahlbar sind, die umso größer ist, je größer eine unmittelbare oder voraussichtliche Gefahr detektiert wurde.

7. Fahrzeug nach einem der Ansprüche 1 bis 6, wobei mit wenigstens einer Geräuschquelle umschaltbar ein Wohlbefindens-Geräusch, ein Hinweisgeräusch und ein Warngeräusch erzeugbar ist.

8. Verfahren zum Betreiben eines Fahrzeugs nach einem der vorhergehenden Ansprüche,
wobei wenigstens ein Geräusch als Wohlbefindens-Geräusch mittels wenigstens einer Geräuschquelle erzeugt wird, insbesondere an einen Fahrer des Fahrzeugs ausgegeben wird, das durch fünf psychoakustische Parameter, nämlich seine
- Schärfe
- Rauigkeit
- Schwankungsstärke
- Modulationsfrequenzen und
- Dominante spezifische Lautheiten im Bark-Frequenzgruppen
definiert ist, die innerhalb eines 5-dimensionalen Raumbereichs liegen, der begrenzt ist durch
- Schärfe kleiner 1 acum
- Rauigkeit im Bereich 0,12 bis 0,25 asper
- Schwankungsstärke kleiner 0,5 vacil
- Keine Modulationsfrequenzen kleiner 20 Hz
- Dominante spezifische Lautheiten in Frequenzgruppen kleiner Bark 12
und
wobei wenigstens ein Geräusch als Hinweisgeräusch mittels wenigstens einer Geräuschquelle erzeugt wird, insbesondere an einen Fahrer des Fahrzeugs ausgegeben wird, das durch fünf psychoakustische Parameter, nämlich seine
- Schärfe
- Rauigkeit
- Schwankungsstärke
- Modulationsfrequenzen und
- Dominante spezifische Lautheiten in Bark Frequenzgruppen
definiert ist, die innerhalb eines 5-dimensionalen Raumbereichs liegen, der begrenzt ist durch
- Schärfe 1 bis 2,5 acum
- Rauigkeit im Bereich 0,25 bis 0,4 asper
- Schwankungsstärke kleiner 0,5 vacil
- Keine Modulationsfrequenzen kleiner 10 Hz
- Dominante spezifische Lautheiten in Frequenzgruppen 10 bis 16 bark
und
wobei wenigstens ein Geräusch als Warngeräusch mittels wenigstens einer Geräuschquelle erzeugt wird, insbesondere an einen Fahrer des Fahrzeugs ausgegeben wird, das durch fünf psychoakustische Parameter, nämlich seine
- Schärfe
- Rauigkeit
- Schwankungsstärke
- Modulationsfrequenzen und
- Dominante spezifische Lautheiten in Bark-Frequenzgruppen
definiert ist, die innerhalb eines 5-dimensionalen Raumbereichs liegen, der begrenzt ist durch
- Schärfe 2,5 bis 4 acum
- Rauigkeit im Bereich 0,5 bis 0,8 asper
- Schwankungsstärke größer 0,5 vacil
- Keine Modulationsfrequenzen kleiner 10 Hz
- Dominante spezifische Lautheiten in Frequenzgruppen 18 bis 22 bark.

## Claims

1. A vehicle, in particular a commercial vehicle, with at least one noise source, wherein the at least one noise source is installed in or on the vehicle and is adapted to generate, in particular emit to a driver of the vehicle, a noise as a well-being noise, which is defined by five psychoacoustic parameters, specifically its
- sharpness
- roughness
- fluctuation strength
- modulation frequencies and
- dominant specific volumes in Bark frequency groups which lie within a 5-dimensional domain that is delimited by
- sharpness less than 1 acum
- roughness in the range of 0.12 to 0.25 asper
- fluctuation strength less than 0.5 vacil
- no modulation frequencies less than 20 Hz
- dominant specific volumes in frequency groups less than Bark 12
and
wherein at least one noise source is installed in or on the vehicle and is adapted to generate, in particular emit to a driver of the vehicle, a noise as an alerting noise, which is defined by five psychoacoustic parameters, specifically its
- sharpness
- roughness
- fluctuation strength
- modulation frequencies and
- dominant specific volumes in Bark frequency groups which lie within a 5-dimensional domain that is delimited by
- sharpness of 1 to 2.5 acum
- roughness in the range of 0.25 to 0.4 asper
- fluctuation strength less than 0.5 vacil
- no modulation frequencies less than 10 Hz
- dominant specific volumes in frequency groups of 10 to 16 bark
and
wherein at least one noise source is installed in or on the vehicle and is adapted to generate, in particular to emit to a driver of the vehicle, a noise as a warning noise, which is defined by five psychoacoustic parameters, specifically its
- sharpness
- roughness
- fluctuation strength
- modulation frequencies and
- dominant specific volumes in Bark frequency groups which lie within a 5-dimensional domain that is delimited by
- sharpness of 2.5 to 4 acum
- roughness in the range of 0.5 to 0.8 asper
- fluctuation strength greater than 0.5 vacil
- no modulation frequencies less than 10 Hz
- dominant specific volumes in frequency groups of 18 to 22 bark.

2. The vehicle according to Claim 1, wherein the at least one noise source can be activated automatically by a sensor system in specific predefined situations and/or subjectively by a driver.

3. The vehicle according to Claim 2, wherein the sensor system comprises proximity sensors, in particular as ultrasonic sensors or laser sensors, and also timers and/or odometers and/or heat sensors and/or seat occupancy sensors and/or similar sensors.

4. The vehicle according to one of Claims 1 to 3, wherein the noises can be emitted from the at least one noise source in different directions and/or at difference volumes.

5. The vehicle according to Claim 4, wherein the warning noises can be emitted from a direction from which an imminent or expected danger has been detected.

6. The vehicle according to Claim 4 or 5, wherein the warning noises can be emitted at a volume that is all the greater the greater an imminent or expected risk which has been detected.

7. The vehicle according to one of Claims 1 to 6, wherein a well-being noise, an alerting noise and a warning noise can be generated by at least one noise source in a selectively switchable manner.

8. A method for operating a vehicle according to one of the preceding claims,
wherein at least one noise is generated, in particular emitted to a driver of the vehicle, by at least one noise source as a well-being noise, which is defined by five psychoacoustic parameters, specifically its
- sharpness
- roughness
- fluctuation strength
- modulation frequencies and
- dominant specific volumes in Bark frequency groups which lie within a 5-dimensional domain that is delimited by
- sharpness of less than 1 acum
- roughness in the range of 0.12 to 0.25 asper
- fluctuation strength less than 0.5 vacil
- no modulation frequencies less than 20 Hz
- dominant specific volumes in frequency groups less than Bark 12
and
wherein at least one noise is generated, in particular emitted to a driver of the vehicle, by at least one noise source as an alerting noise, which is defined by five psychoacoustic parameters, specifically its
- sharpness
- roughness
- fluctuation strength
- modulation frequencies and
- dominant specific volumes in Bark frequency groups which lie within a 5-dimensional domain that is delimited by
- sharpness of 1 to 2.5 acum
- roughness in the range of 0.25 to 0.4 asper
- fluctuation strength less than 0.5 vacil
- no modulation frequencies less than 10 Hz
- dominant specific volumes in frequency groups of 10 to 16 bark
and
wherein at least one noise is generated, in particular emitted to a driver of the vehicle, by at least one noise source as a warning noise, which is defined by five psychoacoustic parameters, specifically its
- sharpness
- roughness
- fluctuation strength
- modulation frequencies and
- dominant specific volumes in Bark frequency groups which lie within a 5-dimensional domain that is delimited by
- sharpness of 2.5 to 4 acum
- roughness in the range of 0.5 to 0.8 asper
- fluctuation strength less than 0.5 vacil
- no modulation frequencies less than 10 Hz
- dominant specific volumes in frequency groups of 18 to 22 bark.

## Revendications

1. Véhicule, en particulier véhicule utilitaire, comprenant au moins une source de bruit, l'au moins une source de bruit étant installée dans ou sur le véhicule et étant adaptée pour générer un bruit comme bruit de bien-être, notamment pour le délivrer à un conducteur du véhicule, lequel bruit est défini par cinq paramètres psycho-acoustiques, à savoir
- sa netteté
- sa rugosité
- son intensité de fluctuation
- ses fréquences de modulation et
- ses sonies spécifiques dominantes dans des groupes de fréquences barks qui sont situés dans une région spatiale à 5 dimensions qui est délimitée par
- une netteté inférieure à 1 acum
- une rugosité comprise entre 0,12 et 0,25 asper
- une intensité de fluctuation inférieure à 0,5 vacil
- aucune fréquence de modulation inférieure à 20 Hz
- des sonies spécifiques dominantes dans des groupes de fréquences inférieurs à bark 12 et
au moins une source de bruit étant installée dans ou sur le véhicule et étant adaptée pour générer un bruit comme bruit d'indication, en particulier pour le délivrer à un conducteur du véhicule, lequel bruit est défini par cinq paramètres psycho-acoustiques, à savoir
- sa netteté
- sa rugosité
- son intensité de fluctuation
- ses fréquences de modulation et
- ses sonies spécifiques dominantes dans des groupes de fréquences bark qui sont situés dans une région spatiale à 5 dimensions qui est délimitée par
- une netteté de 1 à 2,5 acum
- une rugosité dans la gamme allant de 0,25 à 0,4 asper
- une intensité de fluctuation inférieure à 0,5 vacil
- aucune fréquence de modulation inférieure à 10 Hz
- des sonies spécifiques dominantes dans des groupes de fréquences de 10 à 16 barks et
au moins une source de bruit étant installée dans ou sur le véhicule et étant adaptée pour générer un bruit comme bruit d'avertissement, en particulier pour le délivrer à un conducteur du véhicule, lequel est défini par cinq paramètres psycho-acoustiques, à savoir
- sa netteté
- sa rugosité
- son intensité de fluctuation
- ses fréquences de modulation et
- ses sonies spécifiques dominantes dans des groupes de fréquences Bark qui sont situés dans une région spatiale à 5 dimensions qui est délimitée par
- une netteté de 2,5 à 4 acum
- une rugosité dans la gamme allant de 0,5 à 0,8 asper
- une intensité de fluctuation supérieure à 0,5 vacil
- aucune fréquence de modulation inférieure à 10 Hz
- des sonies spécifiques dominantes dans des groupes de fréquences de 18 à 22 barks.

2. Véhicule selon la revendication 1, l'au moins une source de bruit pouvant être activée automatiquement et/ou subjectivement par un conducteur par un système de capteurs dans certaines situations prédéterminées.

3. Véhicule selon la revendication 2, le système de capteurs comportant des capteurs de proximité, notamment sous la forme de capteurs à ultrasons ou de capteurs laser, ainsi que des horloges et/ou des compteurs kilométriques et/ou des capteurs thermiques et/ou des capteurs d'occupation de sièges et/ou des capteurs similaires.

4. Véhicule selon l'une des revendications 1 à 3, le bruit de l'au moins une source de bruit pouvant être émis dans des directions différentes et/ou à des volumes différents.

5. Véhicule selon la revendication 4, des bruits d'avertissement pouvant être émis à partir d'une direction à partir de laquelle un danger immédiat ou probable a été détecté.

6. Véhicule selon la revendication 4 ou la revendication 5, des bruits d'avertissement pouvant être émis à un volume qui est d'autant plus important qu'un danger immédiat ou probable détecté est grand.

7. Véhicule selon l'une des revendications 1 à 6, un bruit de bien-être, un bruit d'indication et un bruit d'avertissement peuvent être générés de manière commutable avec au moins une source de bruit.

8. Procédé de conduite d'un véhicule selon l'une des revendications précédentes,
au moins un bruit étant généré comme bruit de bien-être à l'aide d'au moins une source de bruit, en particulier délivré à un conducteur du véhicule, lequel bruit est défini par cinq paramètres psycho-acoustiques, à savoir
- sa netteté
- sa rugosité
- son intensité de fluctuation
- ses fréquences de modulation et
- ses sonies spécifiques dominantes dans des groupes de fréquences barks qui sont situés dans une région spatiale à 5 dimensions qui est délimitée par
- une netteté inférieure à 1 acum
- une rugosité dans la gamme allant de 0,12 à 0,25 asper
- une intensité de fluctuation inférieure à 0,5 vacil
- aucune fréquence de modulation inférieure à 20 Hz
- des sonies spécifiques dominantes dans des groupes de fréquences inférieures à bark 12
au moins un bruit étant généré comme bruit d'indication à l'aide d'au moins une source de bruit, en particulier délivré à un conducteur du véhicule, lequel bruit est défini par cinq paramètres psycho-acoustiques, à savoir
- sa netteté
- sa rugosité
- son intensité de fluctuation
- ses fréquences de modulation et
- ses sonies spécifiques dominantes dans des groupes de fréquences barks qui sont situés dans une région spatiale à 5 dimensions qui est délimitée par
- une netteté de 1 à 2,5 acum
- une rugosité dans la gamme allant de 0,25 à 0,4 asper
- une intensité de fluctuation inférieure à 0,5 vacil
- aucune fréquence de modulation inférieure à 10 Hz
- des sonies spécifiques dominantes dans des groupes de fréquences de 10 à 16 barks et
au moins un bruit étant généré comme bruit d'avertissement à l'aide d'au moins une source de bruit, en particulier délivré à un conducteur du véhicule, lequel bruit est défini par cinq paramètres psycho-acoustiques, à savoir
- sa netteté
- sa rugosité
- son intensité de fluctuation
- ses fréquences de modulation et
- ses sonies spécifiques dominantes dans des groupes de fréquences barks qui sont situés dans une région spatiale à 5 dimensions qui est délimitée par
- une netteté de 2,5 à 4 acum
- une rugosité dans la gamme allant de 0,5 à 0,8 asper
- une intensité de fluctuation supérieure à 0,5 vacil
- aucune fréquence de modulation inférieure à 10 Hz
- des sonies spécifiques dominantes dans des groupes de fréquences de 18 à 22 barks.
